# EUROPEAN PATENT APPLICATION

(11) **EP 4 772 466 A1**
(43) Date of publication of application: **08.07.2026**
(21) Application number: 25219712.4
(22) Date of filing: 01.12.2025
(51) Int. Cl.: B66C 13/40, B66F 9/075

(54) **MULTIFUNCTIONAL LIFTING VEHICLE PROVIDED WITH A PORTABLE RADIO-CONTROL DEVICE, PORTABLE RADIO-CONTROL DEVICE, AND RELATED METHOD**

(30) Priority: 23.12.2024 IT 202400029778
(71) Applicant: Merlo Project S.r.l., I-12010 - Cervasca (Cuneo) (IT)
(72) Inventor: CONTESSINI, Felice, I-12010 Cervasca (Cuneo) (IT); CIVALLERO, Simona, I-12010 Cervasca (Cuneo) (IT)
(74) Representative: Buzzi, Notaro & Antonielli d'Oulx S.p.A.

(57) **Abstract**

Multifunctional lifting vehicle (1,1') comprising:
- a base frame (2) provided with front and rear support means (3),
- a lifting assembly (5) including at least one operating arm (6) equipped with a fitting (7) for mounting an attachment (8),
- a portable radio-control device (9) comprising a plurality of control elements manually operable by an operator for commanding at least some related movements and/or functions of the vehicle (1) as a whole and/or portions thereof,
- wherein movements of said at least one control element cause at least some related movements and/or functions of the vehicle (1), by adopting a movement convention relative to a point of view of the operator.

## Description

### Field of the invention

The present invention relates to a multifunctional lifting vehicle comprising:
- a base frame,
- a lifting assembly including at least one operating arm equipped with a fitting for mounting an attachment,
- a portable radio-control device configured for controlling the vehicle from a distanced position,
- wherein the portable radio-control device comprises a plurality of control elements manually operable by an operator for driving related movements and functions of the vehicle.

### Prior art

Lifting vehicles of the type indicated above can be equipped with different types of attachments, such as for example forks, buckets, aerial platforms, etc.. During operation, the load applied on the attachment situated at the end of the telescopic arm can vary widely.

According to a well-established technique in the relevant technological field, the lifting vehicle can be advantageously maneuvered remotely by means of a portable radio-control device, configured for controlling the vehicle from a remote position. The radio-control device can be provided with a plurality of control elements, such as control levers, and/or joysticks, and/or cross-directional cursors (D-PAD), and/or buttons, to be manually operated for commanding a plurality of movements and functions of the lifting vehicle.

According to a technique known per se, the radio-control device can be used according to three different "locations":
- inside the vehicle cabin; the radio-control device can be positioned on a dedicated bracket inside the cabin;
- on aerial platform; the radio-control device can be temporarily installed on a specific position easily accessible and particularly stable, to avoid accidental falls and ensure that the radio-control device is always within reach during operations; using the radio-control device from the platform, the operator can manage the platform height, the movements of the telescopic arm, the tilt and other fundamental functions such as locking or unlocking the suspensions, directly from the platform;
- on ground; the radio-control device can be held by the operator who is on the ground near the vehicle, for maneuvering complex loads or when a complete view of the area around the vehicle is required, guaranteeing better visual control over the entire vehicle, the load, and the surrounding environment; the operator is free to move around the vehicle to find the best observation point and position themselves where they have greater control over the movements.

According to some known solutions, the control elements of the radio-control device can comprise a first and a second element (made in the form of a joystick or cross-directional cursors (D-PAD), respectively configured for controlling the forward/backward movement of the vehicle, and the right/left steering of the vehicle. The movements of the first and the second element cause corresponding forward/backward movements and/or steering of the vehicle, by adopting a first movement convention relative to a point of view of the operator looking at the vehicle from the side or by adopting a second movement convention relative to a point of view of the operator looking at the vehicle from the front. In other words, a specific movement for example of the first element (for example moved in the "up" direction) can cause a different movement of the vehicle depending on the adopted convention (for example backward or forward movement of the vehicle).

Different solutions provide that:
- in use inside the cabin, the side point of view is adopted,
- in use on platform of the radio-control device as a control unit, the front point of view is adopted,
   and
- in use on ground, only one of the aforementioned points of view is adopted.

The variation of the vehicle movements with respect to specific displacements of the first and the second element is based on an automatic adoption of one of the conventions, for example following the positioning of a specific selector command that allows the activation of the controls according to one specific location.

The approach employed to date does not allow for taking into account the preferred usage modes of the operators, who may want to command the machine with different movement conventions, even while being in the same location, depending on the operation to be performed, or based on their habit.

The document EP 3 556 713 is also known, which shows a solution of a remote-control device including a control element that the operator can rotate to set a correction angle between a reference direction of the vehicle and a reference direction of the control device.

### Object of the invention

The present invention aims to propose a multifunctional lifting vehicle and a related portable radio-control device, configured to satisfy the aforementioned needs.

A further object of the present invention is to achieve a clear and effective display of the movements and functions imparted to the vehicle, following specific actuations of the control elements of the radio-control device, based on operational needs.

A further object of the present invention is to achieve a particularly intuitive solution in use, which reduces maneuvering errors caused by an incorrect interpretation of the commands of the radio-control device.

### Summary of the invention

According to the solutions described herein, these objects are achieved thanks to a lifting vehicle having the characteristics recalled in the claims that follow.

The solutions described herein can also relate to a portable radio-control device.

The solutions described herein can also relate to a corresponding method.

The claims form an integral part of the teachings provided herein in relation to the embodiments of the solutions described herein.

### Brief description of the drawings

The present invention will now be described in detail with reference to the attached drawings, given by way of non-limiting example only, in which:
- figures 1A,1B schematically show a lifting vehicle according to possible embodiments;
- figure 2 is a schematic view of a portable radio-control device according to possible embodiments;
- figures 3A,3B schematically illustrate a first movement convention and a second movement convention adoptable by the radio-control device, which cause corresponding movements and/or steering of the vehicle;
- figures 4A,4B show different operational screens by way of example of a control display screen included on the radio-control device.

### Detailed description of embodiments

In the following description, various specific details are illustrated aimed at an in-depth understanding of examples of one or more embodiments. The embodiments can be realized without one or more of the specific details, or with other methods, components, materials, etc. In other instances, known structures, materials or operations are not shown or described in detail to avoid obscuring various aspects of the embodiments. Reference to "an embodiment" within this description is intended to indicate that a particular configuration, structure or characteristic described in relation to the embodiment is included in at least one embodiment. Therefore, phrases such as "in one embodiment", possibly present in different places in this description, are not necessarily referring to the same embodiment. Furthermore, particular configurations, structures or characteristics can be suitably combined in one or more embodiments and/or associated with the embodiments in a different way than illustrated herein, so that for example a characteristic exemplified here in relation to one figure can be applied to one or more embodiments exemplified in a different figure.

The references illustrated herein are for convenience only and therefore do not delimit the scope of protection or the scope of the embodiments.

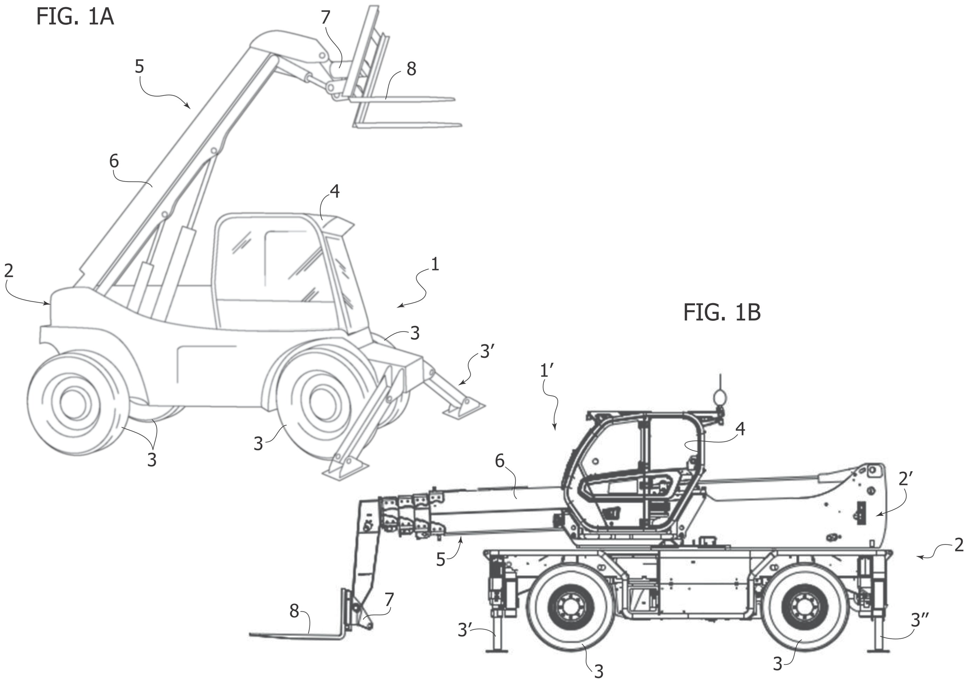

In figures 1A,1B with the references 1,1' are respectively indicated two possible embodiments of a multifunctional lifting vehicle according to the present invention. Note that the features illustrated in these figures are to be considered purely by way of example, since the invention, as defined in the attached independent claims, also covers other types of multifunctional lifting vehicle. The vehicle 1,1' comprises a base frame 2 provided with front and rear support means, for example wheels 3 and/or front stabilizers 3' and/or rear stabilizers 3". The base frame 2 can be a self-propelled frame, possibly provided with a driving cabin 4, fixed or rotating composed of a lower part and an upper part commonly called "turret" 2'.

The vehicle 1,1' further comprises a lifting assembly 5 including at least one operating arm 6 articulated in the rear section of the frame 2 about a transverse axis. The lifting assembly 5 can advantageously comprise a single operating arm or two arms articulated to each other. One or more of said arms can be configured as telescopic so as to vary the prominence relative to the base frame 2.

Note that in figure 1B a possible embodiment of a multifunctional lifting vehicle is illustrated, including a rotating frame part, commonly called "turret" 2' which connects the base frame 2 to the operating arm 6, allowing the rotation and thus the general orientation of the arm.

The vehicle 1,1' further comprises an actuation system configured for actuating the lifting assembly 5. In one or more embodiments, the actuation system comprises at least one lifting/lowering cylinder with ends articulated to the frame 2 and to the arm.

Still with reference to figures 1A,1B, the lifting assembly 5 is provided at its terminal end with a fitting 7 for connecting attachments 8 of different types, such as for example forks, buckets, aerial platforms, etc. By way of non-limiting example only, figures 1A,1B illustrate an example of an attachment 8, in particular a fork carriage connected to a telescopic arm.

According to an essential feature of the present invention, the lifting vehicle 1 can be controlled by means of a portable radio-control device 9. The portable radio-control device 9 can be used by an operator located at one of the following positions:
- inside the cabin 4; the radio-control device 9 can possibly be fixed in position on a dedicated support portion inside the cabin 4;
- on aerial platform; the radio-control device 9 can be temporarily installed on a specific position on board the platform, to avoid accidental falls and ensure that the radio-control device 9 is always within reach during operations; using the radio-control device from on the platform, the operator can manage the platform height, the movements of the telescopic arm, the tilt and other fundamental functions such as locking or unlocking the suspensions, directly from the platform;
- position on ground or more generally in a work area possibly elevated, from which the operator observes the vehicle and the surrounding space; the radio-control device 9 can thus be held by the operator, for maneuvering complex loads or when a complete view of the area around the vehicle is required, guaranteeing better visual control over the entire vehicle, the load, and the surrounding environment; the operator is free to move around the vehicle to find the best observation point and position themselves where they have greater control over the movements.

According to a further characteristic, the vehicle 1 is provided with at least one electronic control unit for receiving command signals transmitted by the radio-control device 9, which regulate the operation of the vehicle based on the received command signals.

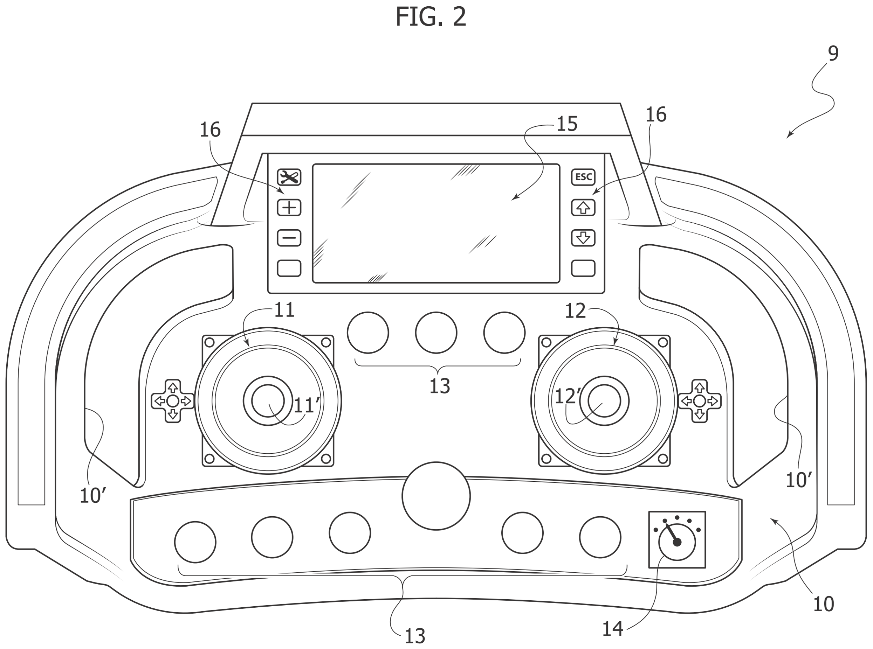

Figure 2 is a schematic view illustrating a possible embodiment of the portable radio-control device 9. In general, the radio-control device 9 comprises an external housing 10 and a plurality of control elements -detailed below- manually operable by an operator for commanding at least some related movements and/or functions, of the vehicle 1 as a whole and/or portions thereof. The control elements are selectable by the user so as to produce the related command signals which are transmitted to the vehicle.

Inside the housing 10 is inserted at least one electronic control board powered by at least one battery, and at least one transmitting/receiving section operatively connected to the control elements. In one or more embodiments, the transmitting/receiving section of the radio-control device comprises a radiofrequency transceiver system for exchanging signals remotely with the electronic control unit of the vehicle 1. Therefore, the operator can maneuver the vehicle 1 remotely, determining for example the movement on the ground and/or the actuation of the lifting assembly 5 and/or the actuation of stabilizer elements associated with the base frame 2.

In accordance with figure 2, the external housing 10 comprises a pair of handles 10', arranged symmetrically with respect to a central symmetry axis of the radio-control device 9. In order to allow the operator to operate the control elements without having to hold the device 9, the external housing 10 can comprise a pair of auxiliary apertures configured for mutual engagement with a support strap worn by the operator.

In accordance with figure 2, the control elements of the device 9 are arranged on a front side of the external housing 10. However, some control elements can possibly also be arranged on a dorsal and/or lateral part of the external housing 10.

In one or more embodiments, the control elements comprise at least one element, made in the form of a joystick or cross-directional cursor (D-PAD), configured for controlling at least the forward/backward movement of the vehicle, and the right/left steering of the vehicle 1, or at least other movements / functions specified below.

In accordance with a preferred configuration, the device 9 comprises a first control element 11, made in the form of a joystick or cross-directional cursor (D-PAD), and a second control element 12, also made in the form of a joystick or cross-directional cursor (D-PAD). Preferably, the first and the second element 11,12 are arranged in a position of mutual symmetry on the front side of the housing 10.

By activating a first operating mode, the first and the second element 11,12 are respectively configured for controlling at least the forward/backward movement, and the right/left steering, of the vehicle 1.

By activating a second operating mode, the first and the second element 11, 12 are respectively configured for controlling at least extension/retraction of the arm, the lifting/lowering of the arm and the tilt of the fitting 7 for connecting attachments 8 of different types, of the vehicle 1.

Preferably, other operating modes exist for controlling other movements / functions of the vehicle as a whole and/or portions thereof.

The control elements can further comprise:
- at least one control button 11',12' located on the top of said at least one element, made in the form of a joystick or cross-directional cursor (D-PAD), and/or
- a plurality of auxiliary command buttons 13, and/or
- an operating mode selector 14 for selecting a specific operating mode of the vehicle, among those available.

Regarding said operating mode selector 14, the lifting vehicle 1 can be selectively set according to an operating mode selected from different operating modes that involve related functions / commands of the vehicle, controllable with the radio-control device 9, such as for example a movement of the arm, movements of the transmission, movements of the stabilizers, movements for lateral and longitudinal leveling of the chassis, activation/deactivation and adjustment of the suspensions.

Regarding the auxiliary command buttons 13, they can be configured for commanding the switching on of the device 9 of the machine, the selection of appropriate machine settings, the activation and selection of electric auxiliary organs.

According to a further feature, the radio-control device 9 comprises a control display screen 15, configured and programmed to display a digital representation of the control elements of the device 9, and possibly movements and/or functions of the vehicle 1, corresponding to respective actuations of the control elements, as well as auxiliary information of the vehicle in motion, such as for example the vehicle speed, the engine rpm, the fuel level in the tank, a scale for indicating the vehicle stability index, etc.

At the sides of the screen 15, some adjustment keys 16 can possibly be arranged for performing visual adjustments of the display screen 15 or for navigating through the available electronic menus. Alternatively, the functions of the adjustment keys can be integrated directly with a touch-screen type display screen.

In accordance with the control elements described above, the display screen 15 can be configured and programmed to display a digital representation of said at least one element, made in the form of a joystick or cross-directional cursor (D-PAD), preferably of the first and the second element 11,12.

More particularly, the digital representation of a single element, made in the form of a joystick or cross-directional cursor (D-PAD) can comprise a central imprint 17,18 representative of the joystick or cross-directional cursor (D-PAD) surrounded by up, down, right, left directional keys. Each directional key can include inside it an arrow representative of a corresponding movement direction of the vehicle. In this perspective, according to possible embodiments, the absence of the arrow within a specific directional key indicates that the movement of the element, made in the form of a joystick or cross-directional cursor (D-PAD), in the corresponding direction does not cause any movement to the vehicle.

Furthermore, in one or more embodiments, the digital representation can be implemented to dynamically display functions and movements of the vehicle corresponding to the actuations of the control elements (for example, moving a specific joystick or cross-directional cursor (D-PAD) upwards will illuminate the up directional key relative to the actuated joystick or cross-directional cursor (D-PAD)).

Furthermore, in one or more embodiments, upon reaching a vehicle stability limit condition, the digital representation displays only possible actuations of the control elements that allow the vehicle to return to a condition of greater stability, excluding those that would cause a rollover of the vehicle.

According to a further important feature, the actuations in the various directions of said at least one element, made in the form of a joystick or cross-directional cursor (D-PAD) cause corresponding movements and/or steering of the vehicle 1, as well as other possible functions / movements detailed below, by adopting a first movement convention relative to a point of view of the operator looking at the vehicle from the side or by adopting a second movement convention relative to a point of view of the operator looking at the vehicle from the front. In other words, a specific movement of said at least one element, made in the form of a joystick or cross-directional cursor (D-PAD) (for example element moved in the "up" direction) can cause a different movement of the vehicle depending on the adopted convention (for example backward or forward movement of the vehicle).

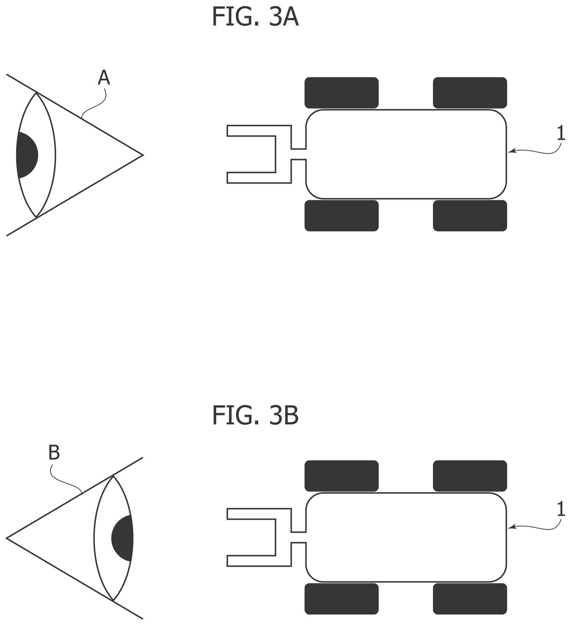

Figures 3A,3B are respective diagrams of the first and the second convention: with the references A,B the respective points of view of the operator using the device 9 relative to the vehicle 1 are indicated.

According to an essential feature, the radio-control device 9 is configured to allow a variation between said first convention and said second convention, so that the movements / functions of the vehicle driven with specific actuations of said at least one element, made in the form of a joystick or cross-directional cursor (D-PAD), result consistent with the preferences of the operator using the device 9 and/or consistent with the point of observation from which the operator observes the vehicle 1 and uses the device 9. In fact, in some cases, beyond the operator's preferences (who might prefer one or the other convention a priori), a given convention that has been preset may ultimately prove disadvantageous and cause maneuvering errors due to an incorrect actuation of said at least one element, made in the form of a joystick or cross-directional cursor (D-PAD), especially in the case of command on the platform. The positioning of the device 9 on the platform might lead the operator to prefer one of the two conventions precisely to avoid such errors, and to make the commands consistent with the most suitable convention.

In one or more embodiments, the selection between the first and the second convention is performed by means of the actuation of a selector element.

The selector element can be configured to send a corresponding signal to at least one electronic control unit of the vehicle, to set the use of the device 9 according to a specific convention.

In some embodiments, the selector element is arranged directly on the radio-control device 9, for example in the form of one of the buttons indicated with 13 in figure 2; in other embodiments the selector device can be incorporated inside the cabin 4.

Other embodiments can provide that the selection between the first and the second convention is performed by interaction with a selection menu displayed on a virtual graphical interface present inside the cabin 4.

Other embodiments can provide that the selection between the first and the second convention is performed automatically by means of a previous memorization of the specific convention.

In one or more embodiments, the radio-control device 9 or the vehicle further comprises at least one safety control algorithm that prevents the operator from adopting a specific movement convention that is deemed inadvisable or incorrect based on the real-time detected position of the operator using the device 9. In other words, the control serves to avoid the use of a convention when deemed harmful because completely inconsistent with the operator's point of view (the operator's position is identified by tracking the position of the radio-control device).

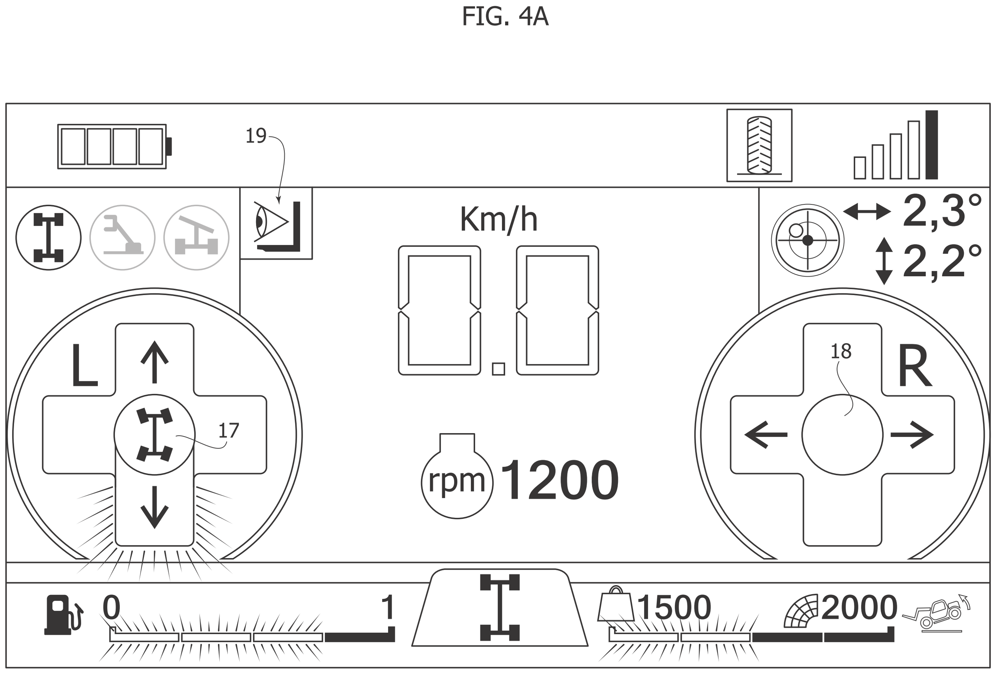

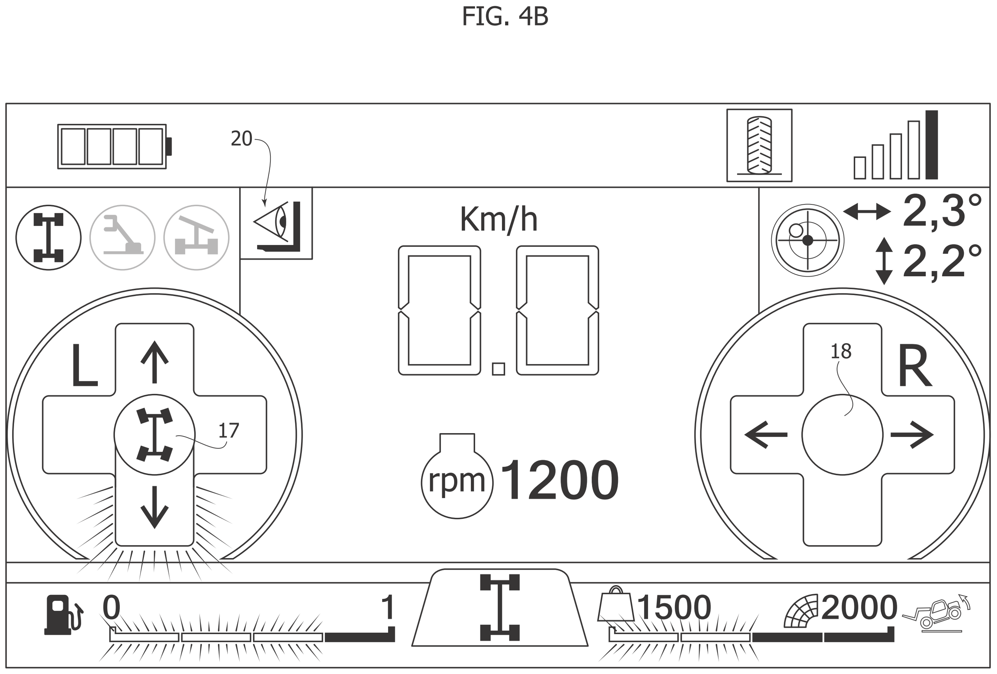

Figures 4A, 4B illustrate by way of example possible digital representations displayable on the screen 15, respectively according to the first convention (side point of view) and the second convention (front point of view).

Preferably, the digital representation includes a symbol 19,20 identifying the first or the second convention, so that the operator is constantly informed of the adopted convention.

Preferably, the digital representation includes a schematic reproduction of the vehicle 1 in the selected mode and related operational parameters such as the ground height of the attachment 8 and the tilt angle of the telescopic arm relative to the base frame.

In figure 4A, the following movements of said at least one element, made in the form of a joystick or cross-directional cursor (D-PAD), cause at least some of the following movements:
- actuation of an element, made in the form of a joystick or cross-directional cursor (D-PAD) (in particular of the first element 11) upwards: forward movement of the vehicle;
- actuation of an element, made in the form of a joystick or cross-directional cursor (D-PAD) (in particular of the first element 11) downwards: backward movement of the vehicle;

- actuation of an element, made in the form of a joystick or cross-directional cursor (D-PAD) (in particular of the second element 12) leftwards: steering of the vehicle towards the left;
- actuation of an element, made in the form of a joystick or cross-directional cursor (D-PAD) (in particular of the second element 12) rightwards: steering of the vehicle towards the right.

As indicated previously, thanks to the operating mode selector 14, the lifting vehicle 1 can be selectively set according to an operating mode selected from different operating modes that involve related functions / commands of the vehicle, controllable with the radio-control device 9, such as for example a movement of the arm, movements of the transmission, movements of the stabilizers, movements for lateral and longitudinal leveling of the chassis, activation/deactivation and adjustment of the suspensions.

Still with reference to the first convention (side point of view), by suitably actuating the operating mode selector 14, the following movements of said at least one element, made in the form of a joystick or cross-directional cursor (D-PAD), cause at least some of the following movements:
- actuation of an element, made in the form of a joystick or cross-directional cursor (D-PAD) leftwards: rotation of the turret towards the left;
- actuation of an element, made in the form of a joystick or cross-directional cursor (D-PAD) rightwards: rotation of the turret towards the right;
- actuation of an element, made in the form of a joystick or cross-directional cursor (D-PAD) leftwards: inclination of the frame towards the left;
- actuation of an element, made in the form of a joystick or cross-directional cursor (D-PAD) rightwards: inclination of the frame towards the right;
- actuation of an element, made in the form of a joystick or cross-directional cursor (D-PAD) leftwards: retraction of the stabilizer;
- actuation of an element, made in the form of a joystick or cross-directional cursor (D-PAD) rightwards: extension of the stabilizer.

Note that the term "turret" refers to the part of the vehicle that connects the base frame 2 to the operating arm 6, allowing the rotation and thus the general orientation of the arm.

In figure 4B, the following movements of said at least one element, made in the form of a joystick or cross-directional cursor (D-PAD), cause the following movements:
- actuation of an element, made in the form of a joystick or cross-directional cursor (D-PAD) (in particular of the first element 11) upwards: backward movement of the vehicle;
- actuation of an element, made in the form of a joystick or cross-directional cursor (D-PAD) (in particular of the first element 11) downwards: forward movement of the vehicle;
- actuation of an element, made in the form of a joystick or cross-directional cursor (D-PAD) (in particular of the second element 12) leftwards: steering of the vehicle towards the right relative to the cabin 4;
- actuation of an element, made in the form of a joystick or cross-directional cursor (D-PAD) (in particular of the second element 12) rightwards: steering of the vehicle towards the left relative to the cabin 4.

Still with reference to the second convention (front point of view), by suitably actuating the operating mode selector 14, the following movements of said at least one element, made in the form of a joystick or cross-directional cursor (D-PAD), cause at least some of the following movements:
- actuation of an element, made in the form of a joystick or cross-directional cursor (D-PAD) leftwards: rotation of the turret towards the right relative to the cabin 4;
- actuation of an element, made in the form of a joystick or cross-directional cursor (D-PAD) rightwards: rotation of the turret towards the left relative to the cabin 4;
- actuation of an element, made in the form of a joystick or cross-directional cursor (D-PAD) leftwards: inclination of the frame towards the right relative to the cabin 4;
- actuation of an element, made in the form of a joystick or cross-directional cursor (D-PAD) rightwards: inclination of the frame towards the left relative to the cabin 4;
- actuation of an element, made in the form of a joystick or cross-directional cursor (D-PAD) leftwards: extension of the stabilizer;
- actuation of an element, made in the form of a joystick or cross-directional cursor (D-PAD) rightwards: retraction of the stabilizer.

Note, as said previously, that the preferred embodiment provides two separate control elements 11,12, made in the form of a joystick or cross-directional cursor (D-PAD), which:
- by actuating the operating mode selector 14 in a first operating mode, command the following movements: a first element 11 for the forward/backward movement and a second element 12 for the steering, of the vehicle 1;
- by actuating the operating mode selector 14 in a second operating mode, command the following movements: a first element 11 for the extension/retraction movement of the arm and a second element 12 for the lifting/lowering movement of the arm and the tilt of the attachment, of the vehicle 1.

Preferably, other operating modes exist for controlling other movements / functions of the vehicle as a whole and/or portions thereof.

In light of what has been described, the radio-control device 9 and/or the vehicle 1 are configured to allow a variation between different conventions, freely decided by the operator, wherein the variation between the conventions causes a variation of some movements and/or functions of the vehicle 1 in response to the same actuations of the control elements; such movements and/or functions that vary due to the variation between the conventions are only movements and/or functions affected by the operator's point of view, and not other movements and/or functions; therefore the movements and/or functions of the vehicle 1 affected by said variation result consistent with the preferences of the operator using the device 9. The movements and/or functions of the vehicle affected by the operator's point of view (and therefore subject to variation) can include forward/backward movement of the vehicle, vehicle steering (right/left), rotation of the turret (right/left), inclination of the frame (right/left), movement of the stabilizers (retraction/extension). The movements and/or functions of the vehicle not affected by the operator's point of view (and therefore not subject to variation) can include extension/retraction of the arm, raising/lowering of the arm, rotation of the attachment (upwards/downwards), raising/lowering of the machine frame, forward/backward inclination of the machine frame and movement of the stabilizers (retraction/extension).

Naturally, without prejudice to the principle of the invention as defined in the attached claims, the construction details and the embodiments may vary widely from what has been described and illustrated, without thereby departing from the scope of the invention as defined in the claims that follow.

## Claims

1. Multifunctional lifting vehicle (1,1') comprising:
- a base frame (2) with or without a rotating turret (2') equipped with wheels (3) or additionally with support means constituted by stabilizers (3', 3''),
- a lifting assembly (5) including at least one operating arm (6) equipped with a fitting (7) for mounting an attachment (8),
- a portable radio-control device (9) comprising at least one control element manually operable by an operator for driving at least some related movements and/or functions of the vehicle (1) as a whole and/or portions thereof,
- wherein movements of said at least one control element cause at least some related movements and/or functions of the vehicle (1), by adopting a movement convention relative to a point of observation of the operator,
- wherein the radio-control device (9) or the vehicle (1) is configured to enable a variation among different conventions,
- wherein said variation among conventions is freely decided by the operator,
- so that the movements of the vehicle driven by specific actuations of said at least one control element are consistent with preferences of the operator while using the device (9) and/or consistent with the point of observation from which the operator observes the vehicle (1) and uses the device (9).

2. Vehicle (1,1') according to claim 1, wherein the radio-control device (9) comprises a control display screen (15), configured and programmed to display a digital representation of at least one control element of the device (9) according to the selected movement convention.

3. Vehicle (1,1') according to claim 2, wherein said at least one control element comprises a joystick or a cross-directional cursor (D-PAD).

4. Vehicle (1,1') according to claim 3, wherein the digital representation of said joystick or cross-directional cursor (D-PAD) comprises a central imprint (17,18) representative of the joystick or the cross-directional cursor (D-PAD) surrounded by up, down, left, right directional buttons, wherein at least some directional buttons respectively include inside them an arrow indicative of a corresponding movement direction of the vehicle as a whole and/or portions thereof.

5. Vehicle (1,1') according to claim 4, wherein some directional buttons lack arrows to indicate that the movement of said joystick or cross-directional cursor (D-PAD) in the corresponding direction does not cause any movement of the vehicle as a whole and/or portions thereof.

6. Vehicle (1,1') according to claim 4, wherein the digital representation dynamically displays functions and movements of the vehicle corresponding to the actuations of said at least one control element, in particular by illuminating the directional button corresponding to the real-time actuation of said joystick or cross-directional cursor (D-PAD).

7. Vehicle (1,1') according to claim 1, wherein the choice of the convention is validated by the activation of a selector element located directly on the radio-control device (9) or within a control cabin (4) of the vehicle (1).

8. Vehicle (1,1') according to claim 1, wherein the radio-control device (9) includes at least one safety control algorithm that prevents the operator from adopting one specific movement convention that is deemed inadvisable or incorrect based on the real-time detected position of the operator using the device (9).

9. Vehicle (1,1') according to claim 2, wherein the control display screen (15) includes a digital representation of an identifier symbol for identifying the selected convention, so as to ensure that the operator is constantly informed of the adopted convention.

10. Vehicle (1,1') according to claim 2 or 9, wherein the digital representation includes a schematic reproduction of the vehicle (1) in its current operating mode.

11. Vehicle (1,1') according to claim 1, wherein the device (9) comprises a first control element (11) provided in the form of a joystick or a cross-directional cursor (D-PAD), and a second control element (12) also provided in the form of a joystick or a cross-directional cursor (D-PAD), respectively configured to drive at least some related movements and/or functions of the vehicle (1) as a whole and/or portions thereof.

12. Vehicle (1,1') according to claim 2, wherein upon reaching a vehicle stability limit condition, the digital representation only displays possible actuations of the control elements that allow the vehicle to return to a more stable condition, excluding those that could cause vehicle rollover.

13. Portable radio-control device (9) for a multifunctional lifting vehicle (1,1'), comprising:
- at least one control element manually operable by an operator to drive at least some related movements and/or functions of the vehicle (1) as a whole and/or portions thereof,
- wherein movements of said at least one control element cause at least some related movements and/or functions of the vehicle (1), by adopting a movement convention relative to a point of observation of the operator
- wherein the radio-control device (9) or the vehicle (1) is configured to enable a variation among conventions,
- wherein said variation among conventions is freely decided by the operator, so that the movements of the vehicle commanded by specific actuations of said at least one control element, result consistent with the preferences of the operator using the device (9) and/or consistent with the point of observation from which the operator observes the vehicle (1) and uses the device (9).

14. Method for controlling a multifunctional lifting vehicle (1,1') by means of a portable radio-control device (9), comprising:
- providing a vehicle (1') and a portable radio-control device (9), wherein the device (9) comprises at least one control element manually operable by an operator for commanding at least some related movements and/or functions of the vehicle (1) as a whole and/or portions thereof,
- wherein movements of said at least one control element cause at least some related movements and/or functions of the vehicle (1), by adopting a movement convention relative to a point of view of the operator
- before controlling the vehicle (1'), selecting one of said conventions, so that the movements and/or functions of the vehicle (1) as a whole and/or portions thereof, commanded by specific actuations of said at least one control element, result consistent with the preferences of the operator using the device (9) and/or consistent with the point of observation from which the operator observes the vehicle (1) and uses the device (9),
- allowing a variation between said conventions.
